# EUROPEAN PATENT APPLICATION

(11) **EP 4 039 368 A1**
(43) Date of publication of application: **10.08.2022**
(21) Application number: 21212657.7
(22) Date of filing: 07.12.2021
(51) Int. Cl.: B03C 1/14, B03C 1/30, B01D 21/02, B23Q 11/00, B23Q 11/10

(54) **SEPARATION DEVICE**

(30) Priority: 09.02.2021 JP 2021018991
(71) Applicant: Sumitomo Heavy Industries Finetech, Ltd., Kurashiki-shi, Okayama 713-8501 (JP)
(72) Inventor: MIYAGAWA, Kazuhiko, 8230, Tamashima-Otoshima, Kurashiki-shi, Okayama, 713-8501, (JP); ITADANI, Kaisei, 8230, Tamashima-Otoshima, Kurashiki-shi, Okayama, 713-8501, (JP)
(74) Representative: Louis Pöhlau Lohrentz

(57) **Abstract**

Provided is a separation device capable of separating non-magnetic abrasive grains and oil from a liquid to be treated, such as a coolant. A part of an outer peripheral surface (21) of an orbiting mechanism (20) is immersed in a liquid to be treated (80) flowing through a first flow path (11). The outer peripheral surface (21) orbits so as to cross a liquid surface. Oil (81) floating on the liquid surface is attracted to the outer peripheral surface (21) and separated from the liquid to be treated (80) in the first flow path (11). The oil (81) attracted to the outer peripheral surface (21) of the orbiting mechanism (20) is removed from the outer peripheral surface (21) by a first scraper (23) . An abrasive grain accumulation part (30) is provided on the downstream side of the first flow path (11) with respect to a position where the outer peripheral surface (21) of the orbiting mechanism (20) is immersed. Non-magnetic abrasive grains (82) having a larger specific gravity than the liquid to be treated (80) are accumulated in the abrasive grain accumulation part (30). A liquid-to-be-treated discharge structure (35) is provided on the downstream side of the first flow path (11) with respect to the position where the outer peripheral surface (21) of the orbiting mechanism (20) is immersed. The liquid-to-be-treated discharge structure (35) separates the liquid to be treated (80) in the first flow path (11) from the abrasive grains (82) and discharges the liquid to be treated (80) from the first flow path (11).

## Description

### BACKGROUND OF THE INVENTION

### Field of the Invention

The present invention relates to a separation device that separates a liquid to be treated and foreign matter contained in the liquid to be treated.

### Description of Related Art

A separation device that separates magnetic sludge and non-magnetic abrasive grains which are discharged together with a coolant when cutting a magnetic material such as iron is known (refer to Japanese Unexamined Patent Publication No. 2007-978) . In this separation device, the magnetic sludge is attracted to the surface of a rotating drum by a magnetic force to be separated from the coolant. Further, the non-magnetic abrasive grains are recovered through an opening portion provided on the bottom surface of a flow path for the coolant. Further, a separation device that cleans a coolant (a cutting fluid) by removing magnetic sludge contained in the coolant or oil floating on the upper surface of the coolant is known (refer to Japanese Unexamined Utility Model Publication No. 5-56346).

### SUMMARY OF THE INVENTION

In the separation device disclosed in Japanese Unexamined Patent Publication No. 2007-978, the abrasive grains that have not been recovered through the opening portion are discharged together with the coolant. Further, in the separation device disclosed in Japanese Unexamined Patent Publication No. 2007-978, it is not possible to separate the coolant and oil. In the separation device disclosed in Japanese Unexamined Utility Model Publication No. 5-56346, it is not possible to separate non-magnetic abrasive grains from the coolant.

An obj ect of the present invention is to provide a separation device capable of separating non-magnetic abrasive grains and oil from a liquid to be treated, such as a coolant.

According to an aspect of the present invention, there is provided a separation device including:
an orbiting mechanism having an outer peripheral surface whose partial region is immersed in a liquid to be treated flowing through a first flow path and which orbits to cross a liquid surface, and attracting oil floating on the liquid surface to separate the oil from the liquid to be treated in the first flow path;
a first scraper that removes the oil attracted to the outer peripheral surface of the orbiting mechanism from the outer peripheral surface of the orbiting mechanism;
an abrasive grain accumulation part which is provided on a downstream side of the first flow path with respect to a position where the outer peripheral surface of the orbiting mechanism is immersed, and in which non-magnetic abrasive grains having larger specific gravity than the liquid to be treated are accumulated; and
a liquid-to-be-treated discharge structure which is provided on the downstream side of the first flow path with respect to the position where the outer peripheral surface of the orbiting mechanism is immersed, and separates the liquid to be treated in the first flow path from the abrasive grains and discharges the liquid to be treated from the first flow path.

It is possible to separate non-magnetic abrasive grains and oil contained in a liquid to be treated.

### BRIEF DESCRIPTION OF THE DRAWINGS

Fig. 1 is a diagram showing planar disposition of each component of a separation device according to an example.
Fig. 2 is a sectional view taken along a dashed-dotted line 2-2 of Fig. 1.
Fig. 3 is a sectional view taken along a dashed-dotted line 3-3 of Fig. 1.
Fig. 4 is a schematic diagram of a grinding apparatus that performs cleaning of a coolant by using the separation device according to the example.
Fig. 5 is a diagram showing planar disposition of each component of a separation device according to another example.
Fig. 6 is a diagram showing planar disposition of each component of a separation device according to still another example.
Fig. 7 is a sectional view including a rotation axis of a common drum, of the separation device according to the example shown in Fig. 6.

### DETAILED DESCRIPTION OF THE INVENTION

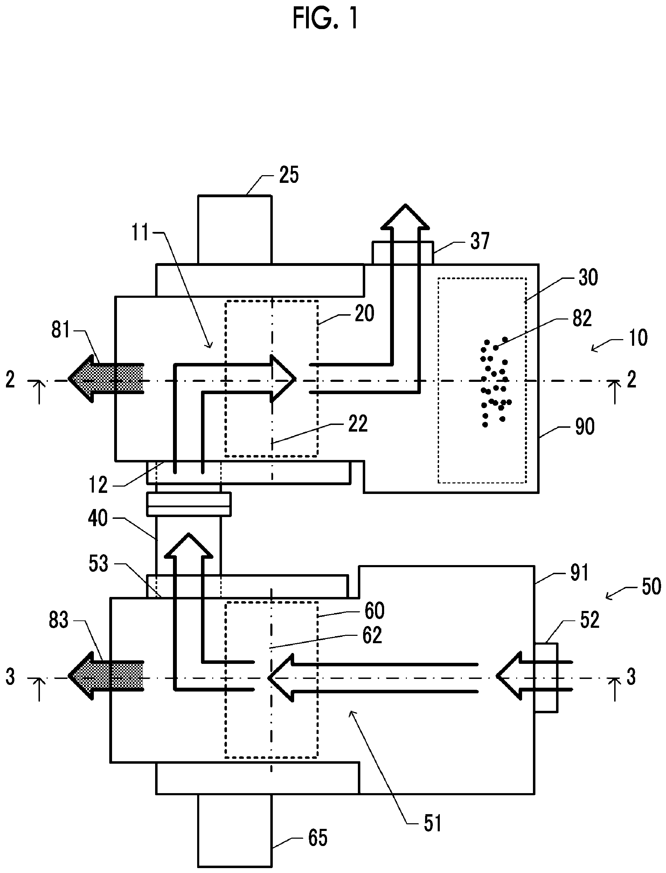

A separation device according to an example will be described with reference to Figs. 1 to 4.
Fig. 1 is a diagram showing planar disposition of each component of the separation device according to the present example. The separation device according to the present example includes a pre-stage separation device 50 and a post-stage separation device 10. The post-stage separation device 10 includes a casing 90, an inflow port 12, a first flow path 11, a discharge port 37, an abrasive grain accumulation part 30, a first drum 20, and a motor 25. The pre-stage separation device 50 includes a casing 91, an inflow port 52, a second flow path 51, an outflow port 53, a second drum 60, and a motor 65.

A liquid to be treated that includes magnetic sludge, oil, and non-magnetic abrasive grains discharged from a grinding machine flows into the second flow path 51 from the inflow port 52. In Fig. 1, the flow direction of a liquid to be treated is indicated by a white arrow. The liquid to be treated that has flowed through the second flow path 51 flows out from the outflow port 53, passes through a connection flow path 40, and flows into the first flow path 11 from the inflow port 12. The liquid to be treated that has flowed into the first flow path 11 flows out from the discharge port 37. The outflow port 53 is provided laterally with respect to the flow direction in the second flow path 51, and the inflow port 12 is provided laterally with respect to the flow direction in the first flow path 11. When the liquid to be treated that has flowed through the second flow path 51 flows into the first flow path 11, the flow direction is reversed.

The first drum 20 is rotated by the power that is transmitted from the motor 25 through a sprocket and a chain. A rotation axis 22 of the first drum 20 is horizontal and intersects the first flow path 11 when viewed in a plan view. The second drum 60 is rotated by the power that is transmitted from the motor 65 through a sprocket and a chain. A rotation axis 62 of the second drum 60 is horizontal and intersects the second flow path 51 when viewed in a plan view.

Magnetic sludge 83 included in the liquid to be treated is discharged in the flow direction in the second flow path 51 from the casing 91, as shown by an arrow in Fig. 1. Oil 81 included in the liquid to be treated is discharged in the direction opposite to the flow direction in the first flow path 11 from the casing 90, as shown by an arrow in Fig. 1. The magnetic sludge 83 and the oil 81 are discharged in the same direction when viewed from the rotation axes 22 and 62 of the first drum 20 and the second drum 60 when viewed in a plan view.

The abrasive grain accumulation part 30 is located at an end portion on the downstream side of the first flow path 11, and non-magnetic abrasive grains 82 included in the liquid to be treated are accumulated in the abrasive grain accumulation part 30. The liquid to be treated from which the magnetic sludge 83, the oil 81, and the abrasive grains 82 have been removed is discharged to the outside of the casing 90 through the discharge port 37.

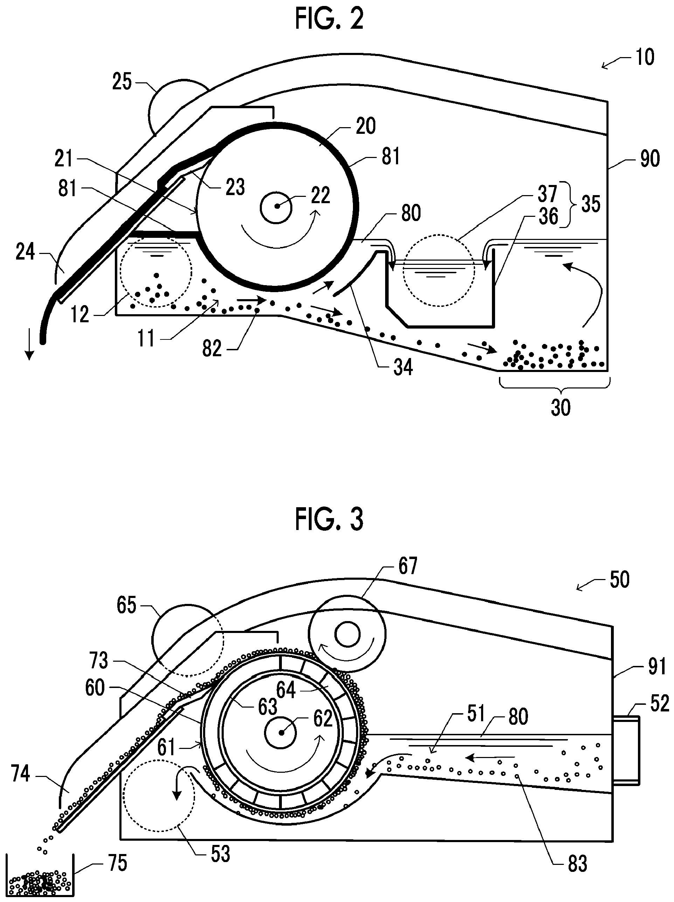

Fig. 2 is a sectional view taken along a dashed-dotted line 2-2 of Fig. 1, that is, a sectional view of the post-stage separation device 10. The first flow path 11 is defined in the casing 90. The inflow port 12 is provided in the vicinity of the left end of the side surface of the casing 90. A liquid to be treated 80 that has flowed in from the inflow port 12 flows from left toward right through the first flow path 11. In Fig. 2, the flow direction of the liquid to be treated 80 in the first flow path 11 is indicated by an arrow. The liquid to be treated 80 that has flowed into the first flow path 11 includes the oil 81 used as sliding oil and the non-magnetic abrasive grains 82. Since the specific gravity of the oil 81 is smaller than the specific gravity of the liquid to be treated 80, the oil 81 floats on the liquid surface of the liquid to be treated 80. Since the specific gravity of the abrasive grain 82 is larger than the specific gravity of the liquid to be treated 80, the abrasive grains 82 gather on the lower side of the liquid to be treated 80 in the first flow path 11.

A partial region of an outer peripheral surface 21 of the first drum 20 is immersed in the liquid to be treated 80 flowing through the first flow path 11 on the downstream side of the inflow port 12. The first drum 20 is supported in the casing 90 in a posture in which the center axis thereof is parallel to the liquid surface of the liquid to be treated 80 and is orthogonal to the flow direction of the liquid to be treated 80 flowing through the first flow path 11. The motor 25 rotates the first drum 20 around the rotation axis 22. When the first drum 20 is rotated, the outer peripheral surface 21 of the first drum 20 orbits so as to cross the liquid surface of the liquid to be treated 80. A rotation direction of the first drum 20 is set such that a peripheral speed direction of the outer peripheral surface 21 immersed in the liquid to be treated 80 is the same as the flow direction in the first flow path 11.

The oil 81 floating on the liquid surface is attracted to the outer peripheral surface 21 of the first drum 20 due to surface tension, and slips into the liquid to be treated 80 according to the rotation of the first drum 20. Thereafter, it is separated from the liquid to be treated 80 across the liquid surface of the liquid to be treated 80.

The oil 81 attracted to the outer peripheral surface 21 of the first drum 20 is scraped off by a first scraper 23 and removed from the outer peripheral surface 21. The oil 81 scraped off by the first scraper 23 is discharged through an oil discharge path 24. The direction in which the oil is discharged when viewed in a plan view is the direction opposite to the flow direction in the first flow path 11.

The bottom surface of the first flow path 11 is inclined so as to be gradually lowered toward the downstream on the downstream side of the lowermost end of the first drum 20. The liquid to be treated 80, which has passed through the first flow path 11 below the first drum 20, is branched into a flow that is directed obliquely upward along the outer peripheral surface 21 of the first drum 20 and a flow that is directed obliquely downward along the bottom surface of the first flow path 11 by an up-down separation plate 34. Most of the abrasive grains 82 having a large specific gravity move along the flow that is directed obliquely downward.

A liquid-to-be-treated discharge structure 35 is disposed on the downstream side of the first flow path 11 with respect to the position where the outer peripheral surface 21 of the first drum 20 is immersed. The liquid-to-be-treated discharge structure 35 includes a container 36 and the discharge port 37. The container 36 has an opening facing upward and is immersed in the liquid to be treated 80 in the first flow path 11. The upper end of the container 36 is disposed at a position slightly deeper than the liquid surface, and the liquid to be treated 80 near the liquid surface (an outer layer portion) flows into the container 36 through the opening. The liquid to be treated 80 that has flowed into the container 36 is discharged to the outside of the casing 90 from the discharge port 37 provided on the side surface of the casing 90. Since the abrasive grains 82 do not float near the liquid surface of the liquid to be treated 80, the liquid to be treated 80 is separated from the abrasive grains 82 by the liquid-to-be-treated discharge structure 35.

The abrasive grains 82 included in the liquid to be treated 80 that is separated by the up-down separation plate 34 and directed obliquely downward are accumulated in the abrasive grain accumulation part 30 provided at an end portion on the downstream side of the first flow path 11. The abrasive grain accumulation part 30 is configured with a bottom surface lower than the bottom surface of the first flow path 11. The liquid to be treated 80 that has reached the end portion on the downstream side of the first flow path 11 flows upward and flows into the container 36. The abrasive grains accumulated in the abrasive grain accumulation part 30 are sucked by using, for example, a vacuum pump or the like, and are removed from the inside of the casing 90.

Fig. 3 is a sectional view taken along a dashed-dotted line 3-3 of Fig. 1, that is, a sectional view of the pre-stage separation device 50. The second flow path 51 through which the liquid to be treated 80 flows is defined in the casing 91. In Fig. 3, the flow direction of the liquid to be treated 80 in the second flow path 51 is indicated by an arrow. The liquid to be treated 80 flows into the second flow path 51 from the inflow port 52 provided at the right end of the casing 91. The liquid to be treated 80 flows in the left direction and flows out from the outflow port 53 provided in the vicinity of the end portion on the downstream side of the second flow path 51.

The second drum 60 is disposed in the casing 91. A partial region of an outer peripheral surface 61 of the second drum 60 is immersed in the liquid to be treated 80 flowing through the second flow path 51. The second drum 60 is supported in the casing 91 in a posture in which the center axis thereof is parallel to the liquid surface of the liquid to be treated 80 and is orthogonal to the flow direction of the liquid to be treated 80. The second drum 60 is rotated around the rotation axis 62 by the motor 65. The transmission of the driving force from the motor 65 to the second drum 60 is performed by, for example, a sprocket and a chain. The moving direction (peripheral speed direction) of the outer peripheral surface 61 of the second drum 60 is opposite to the flow direction of the liquid to be treated 80.

In the internal space of the second drum 60, an inner cylinder 63 is coaxially disposed with a slight gap from the inner peripheral surface of the second drum 60. The inner cylinder 63 is fixed to the casing 91 and does not rotate, and a plurality of magnets 64 are disposed side by side in the circumferential direction on the outer peripheral surface of the inner cylinder 63. Each of the magnets 64 is disposed such that magnetic poles having different polarities appear on the surface on the inner periphery side and the surface on the outer periphery side and an S-pole and an N-pole appear alternately in the circumferential direction. Further, the magnets 64 are disposed in the region immersed in the liquid to be treated 80 and the region from the immersed region to the top portion of the inner cylinder 63 in the peripheral speed direction of the outer peripheral surface 61 of the second drum 60, in the circumferential direction. The plurality of magnets 64 generate magnetic flux on the outer peripheral surface 61 of the second drum 60. Due to this magnetic flux, the magnetic sludge 83 is attracted to the outer peripheral surface 61 of the second drum 60.

A part of the bottom surface of the second flow path 51 has a shape that reflects the shape of the outer peripheral surface 61 of the second drum 60 such that the dimension in the radial direction from the outer peripheral surface 61 of the second drum 60 to the bottom surface of the second flow path 51 falls within a predetermined range. When the liquid to be treated 80 flows in the vicinity of the outer peripheral surface 61 of the second drum 60, the magnetic sludge 83 is attracted to the outer peripheral surface 61 of the second drum 60 by the magnetic force of the magnet 64. The attracted magnetic sludge 83 moves with the rotation of the second drum 60 and is separated from the liquid to be treated 80.

A second scraper 73 is in contact with the outer peripheral surface 61 of the second drum 60 at the position of about 1/8 turn in the peripheral speed direction from the top portion of the second drum 60. The magnet 64 is not disposed at the location with which the second scraper 73 is in contact, of the outer peripheral surface of the second drum 60. The second scraper 73 scrapes off the magnetic sludge 83 on the outer peripheral surface 61 of the second drum 60 from the outer peripheral surface 61. The magnetic sludge 83 scraped off by the second scraper 73 is recovered to a recovery container 75 through a discharge path 74.

A roller 67 is pressed against the outer peripheral surface 61 of the second drum 60 at a position from the contact location between the outer peripheral surface 61 of the second drum 60 and the liquid surface of the liquid to be treated 80 to the top portion of the outer peripheral surface 61 in the peripheral speed direction. The roller 67 rotates in the direction opposite to the rotation direction of the second drum 60 by power that is transmitted from the rotation axis of the second drum 60 through a sprocket and a chain. An elastic body is disposed on the outer peripheral surface of the roller 67. When the magnetic sludge 83 attracted to the outer peripheral surface 61 of the second drum 60 passes between the second drum 60 and the roller 67, a liquid component adhered to the outer peripheral surface 61 of the second drum 60 is removed. In this way, the magnetic sludge 83 having a few liquid component can be separated and recovered. In this manner, the pre-stage separation device 50 separates the magnetic sludge 83 included in the liquid to be treated 80 flowing through the second flow path 51 from the liquid to be treated 80 by using the magnetic force.

Next, the relationship between the first drum 20 and the second drum 60 will be described.

The rotation axis 22 (Fig. 2) of the first drum 20 and the rotation axis 62 (Fig. 3) of the second drum 60 are parallel to each other, or the rotation axis 62 of the second drum 60 is located on the extension line of the rotation axis 22 of the first drum 20. The first drum 20 and the second drum 60 rotate in the same rotation direction.

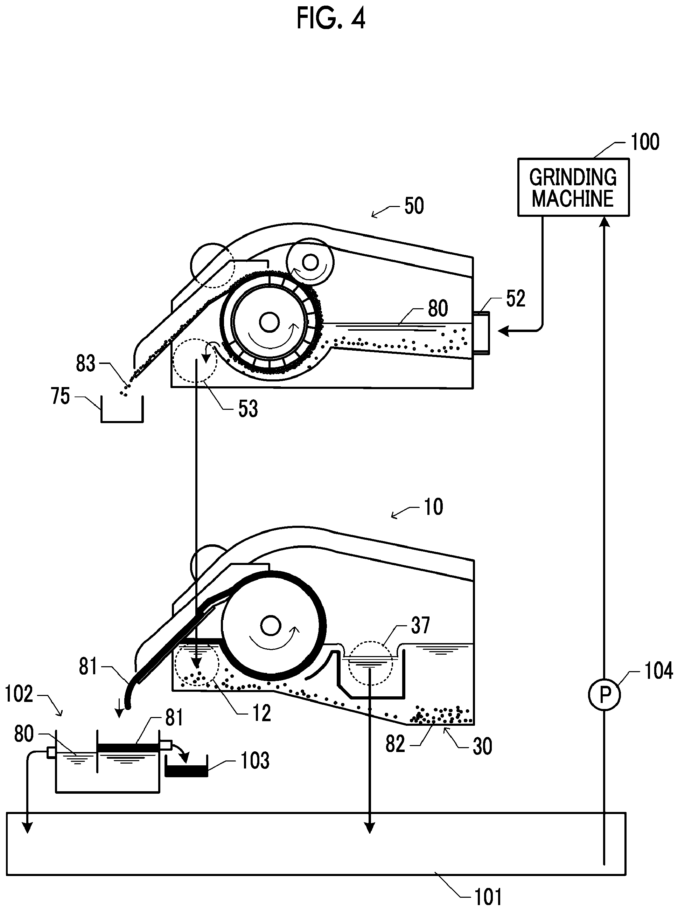

Fig. 4 is a schematic diagram of a grinding apparatus that performs cleaning of a coolant by using the separation device according to the example. The liquid to be treated 80 used as the coolant is discharged from a grinding machine 100. The magnetic sludge 83, the non-magnetic abrasive grains 82, and the oil 81 are included in the liquid to be treated 80. The liquid to be treated 80 flows into the pre-stage separation device 50 from the inflow port 52.

The magnetic sludge 83 is separated from the liquid to be treated 80 by the pre-stage separation device 50 and recovered to the recovery container 75. The liquid to be treated 80 flows out from the outflow port 53 of the pre-stage separation device 50 and flows into the post-stage separation device 10 from the inflow port 12. The oil separated by the post-stage separation device 10 is introduced into an oil-water separation tank 102. The liquid to be treated 80 and the oil 81 are further separated by the oil-water separation tank 102, and the oil 81 is recovered to a recovery container 103. The liquid to be treated 80 separated in the oil-water separation tank 102 is recovered to a coolant tank 101. Further, the liquid to be treated 80 that has flowed out from the discharge port 37 of the post-stage separation device 10 is recovered to the coolant tank 101. The liquid to be treated 80 recovered to the coolant tank 101 is supplied to the grinding machine 100 by a pump 104.

The non-magnetic abrasive grains 82 included in the liquid to be treated 80 are accumulated in the abrasive grain accumulation part 30 of the post-stage separation device 10.

Next, the excellent effect of the above example will be described.

The magnetic sludge 83, the oil 81, and the abrasive grains 82 can be separated from the liquid to be treated 80 by the separation device according to the above example. Further, the flow direction of the liquid to be treated 80 in the second flow path 51 and the flow direction of the liquid to be treated 80 in the first flow path 11 are opposite to each other when viewed in a plan view. That is, the flow of the liquid to be treated 80 is folded back in the middle of the treatment. Therefore, it is possible to shorten the length of the entire device. By installing the pre-stage separation device 50 and the post-stage separation device 10 above the coolant tank 101 (Fig. 4), it is possible to reduce a space.

As shown in Fig. 1, when viewed in a plan view, the magnetic sludge 83 and the oil 81 are discharged in the same direction when viewed from the rotation axis 22 of the first drum 20 and the rotation axis 62 of the second drum 60. Therefore, the workability of the work of recovering the magnetic sludge 83 and the oil 81 can be improved.

Further, the post-stage separation device 10 can be easily post-installed to a workplace where the pre-stage separation device 50 has already been introduced. Since the first drum 20 and the second drum 60 are driven by different motors 25 and 65, respectively, the rotation speeds of the first drum 20 and the second drum 60 can be individually adjusted so as to increase the recovery rate of the magnetic sludge 83 or the oil 81.

The post-stage separation device 10 recovers the liquid to be treated 80 in the vicinity of the liquid surface (the outer layer portion) of the liquid to be treated 80. The abrasive grains 82 having large specific gravity are hardly present in the outer layer portion. Therefore, it is possible to prevent some abrasive grains 82 from remaining in the liquid to be treated 80 recovered by the post-stage separation device 10. In this way, the cleanliness of the liquid to be treated 80 can be improved.

Next, modification examples of the above example will be described.

In the above example, the first drum 20 (Fig. 2) is used to attract oil in the post-stage separation device 10. An endless belt may be used instead of the first drum 20. Similar to the outer peripheral surface 21 of the first drum 20, the outer peripheral surface of the endless belt has a partial region which is immersed in the liquid to be treated 80 flowing through the first flow path 11, and orbits so as to cross the liquid surface. In this manner, it is possible to use an orbiting mechanism having an outer peripheral surface that orbits, such as the first drum 20 or the endless belt.

In the above example, the container 36 is immersed in the liquid to be treated 80 in the first flow path 11 (Fig. 2), and the liquid to be treated 80 of the outer layer portion is flowed out from the discharge port 37. As the liquid-to-be-treated discharge structure 35, another structure may be used. For example, a configuration maybe made in which an opening is provided in the wall surface of the casing 90 located at the downstream end of the first flow path 11 and the liquid to be treated 80 flows out from the opening. This opening may be provided near the height of the liquid surface.

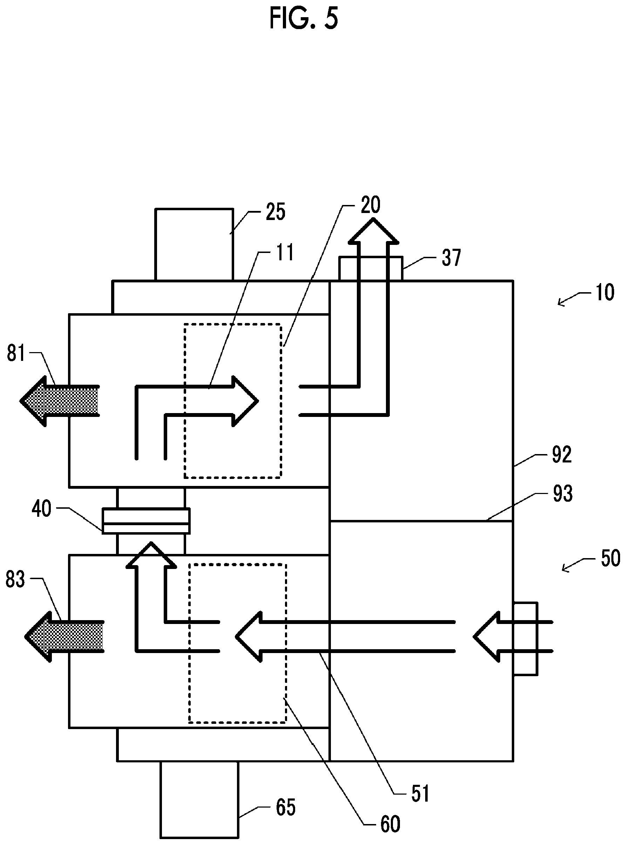

Next, a separation device according to another example will be described with reference to Fig. 5. Hereinafter, description of the configuration common to the separation device according to the example shown in Figs. 1 to 4 will be omitted.

Fig. 5 is a diagram showing planar disposition of each component of the separation device according to this example. In the example shown in Figs. 1 to 4, the casing 91 (Fig. 1) of the pre-stage separation device 50 and the casing 90 of the post-stage separation device 10 are separated from each other, and each is configured as an individual casing. In contrast, in the example shown in Fig. 5, the second flow path 51 on the upstream side of the location where the second drum 60 is disposed and the first flow path 11 on the downstream side of the location where the first drum 20 is disposed are formed inside a common casing 92. In the common casing 92, the first flow path 11 and the second flowpath 51 are separated from each other by a partition wall 93.

Next, the excellent effect of this example will be described.

In the separation device according to this example, it is possible to further reduce the size of the separation device by sharing a part of the casing.

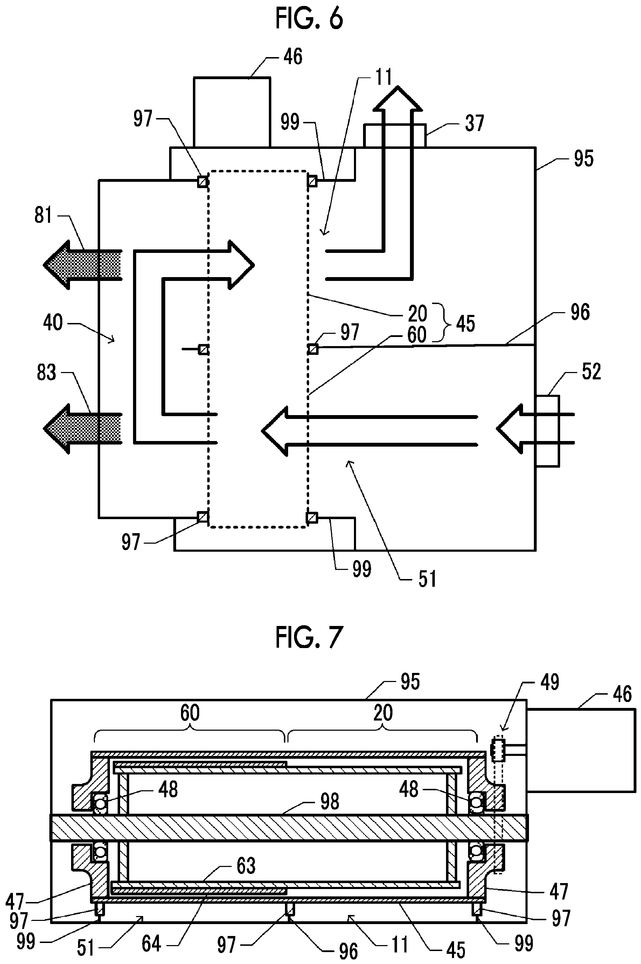

Next, a separation device according to still another example will be described with reference to Figs. 6 and 7. Hereinafter, description of the configuration common to the separation devices shown in Figs. 1 to 4 will be omitted.

Fig. 6 is a diagram showing planar disposition of each component of the separation device according to this example. In this example, the first flow path 11 and the second flow path 51 are defined inside a common casing 95. The first flow path 11 and the second flow path 51 are separated from each other by a partition wall 96 installed in the casing 95. The partition wall 96 reaches a position higher than the liquid surface of the liquid to be treated 80 upward from the bottom surface of the first flow path 11 and the second flow path 51.

Further, in the example shown in Figs. 1 to 4, the first drum 20 is disposed so as to intersect the first flow path 11, and the second drum 60 is disposed so as to intersect the second flow path 51. The first drum 20 and the second drum 60 are rotationally driven by the motors 25 and 65, respectively. In contrast, in this example, the first drum 20 and the second drum 60 are configured with a single common drum 45. The common drum 45 is rotationally driven by a single motor 46.

The partition wall 96 extends along the flow direction from the end portion on the downstream side of the first flow path 11 and the end portion on the upstream side of the second flow path 51, and intersects the common drum 45. The partition wall 96 is removed corresponding to the cross-sectional shape of the common drum 45 at the location intersecting the common drum 45. A gap is formed between the edge of the partition wall 96 and the outer peripheral surface of the common drum 45 . A gap closing material 97 such as felt closes this gap.

The partition wall 96 is not disposed between the vicinity of the end portion on the downstream side of the second flow path 51 and the vicinity of the end portion on the upstream side of the first flow path 11, and the second flow path 51 and the first flow path 11 are connected to each other. The region where the partition wall 96 is not disposed functions as a connection flow path 40 that connects the second flow path 51 to the first flow path 11.

Both ends of the common drum 45 protrude to the outside of side walls 99 of the first flow path 11 and the second flow path 51. The gap between the edge of the side wall 99 and the outer peripheral surface of the common drum 45 is closed by the gap closing material 97.

Fig. 7 is a sectional view including a rotation axis of the common drum 45, of the separation device according to the example shown in Fig. 6. A portion on the bottom surface side of the inside of the casing 95 is divided into the first flow path 11 and the second flow path 51 by the partition wall 96. Each of the first flow path 11 and the second flow path 51 is defined between each of the outer side walls 99 and the partition wall 96.

A rod 98 is disposed inside the casing 95. The rod 98 is horizontally supported so as to cross the first flow path 11 and the second flow path 51, and extends along the rotation axis of the common drum 45. The rod 98 is fixed to the casing 95.

The opening portions at both ends of the common drum 45 are closed by disks 47 each having an opening at the center. The rod 98 passes through the openings of the disks 47. Two disks 47 are rotatably supported on the rod 98 by ball bearings 48. Power is transmitted from the motor 46 to the disk 47 on one side through a sprocket-and-chain 49 . The common drum 45 rotates with the center line of the rod 98 as a rotation axis. About half of the common drum 45 in the axial direction functions as the first drum 20, and the remaining portion functions as the second drum 60.

The inner cylinder 63 is fixed to the rod 98. A gap is secured between the outer peripheral surface of the inner cylinder 63 and the inner peripheral surface of the common drum 45. The magnets 64 are mounted within the range of the second flow path 51 on the outer peripheral surface of the inner cylinder 63.

The gap between the edge of the partition wall 96 and the outer peripheral surface of the common drum 45 is closed by the gap closing material 97. Similarly, the gap between the edge of the side wall 99 and the outer peripheral surface of the common drum 45 is closed by the gap closing material 97. The gap closing materials 97 are mounted to the partition wall 96 and the side wall 99, respectively. For the gap closing material 97, for example, felt or the like is used. When the common drum 45 rotates, the outer peripheral surface of the common drum 45 slides with respect to the gap closing material 97.

Next, the excellent effect of the example shown in Figs. 6 and 7 will be described.

In this example, since the casing of the pre-stage separation device 50 and the casing of the post-stage separation device 10 are integrated, the size of the device can be reduced. Further, since the second drum 60 of the pre-stage separation device 50 and the first drum 20 of the post-stage separation device 10 are integrated to configure the common drum 45 and driven by a single motor 46, energy saving performance can be improved.

It goes without saying that each of the examples described above is exemplification and the configurations shown in different examples can be partially replaced or combined. The same operation and effects due to the same configuration of a plurality of examples are not be mentioned sequentially for each example. Furthermore, the present invention is not limited to the examples described above. For example, it will be obvious to those skilled in the art that various changes, improvements, combinations, or the like can be made.

### Brief Description of the Reference Symbols

- 10: post-stage separation device
- 11: first flow path
- 12: inflow port
- 20: first drum
- 21: outer peripheral surface of first drum
- 22: rotation axis of first drum
- 23: first scraper
- 24: oil discharge path
- 25: motor
- 30: abrasive grain accumulation part
- 34: up-down separation plate
- 35: liquid-to-be-treated discharge structure
- 36: container
- 37: discharge port
- 40: connection flow path
- 45: common drum
- 46: motor
- 47: disk
- 48: ball bearing
- 49: sprocket-and-chain
- 50: pre-stage separation device
- 51: second flow path
- 52: inflow port
- 53: outflow port
- 60: second drum
- 61: outer peripheral surface of second drum
- 62: rotation axis of second drum
- 63: inner cylinder
- 64: magnet
- 65: motor
- 67:: roller
- 73: second scraper
- 74: discharge path
- 75: recovery container
- 80: liquid to be treated
- 81: oil
- 82: abrasive grain
- 83: magnetic sludge
- 90, 91: casing
- 92: common casing
- 93: partition wall
- 95: casing
- 96: partition wall
- 97: gap closing material
- 98: rod
- 99: outer side walls of first flow path and second flow path
- 100: grinding machine
- 101: coolant tank
- 102: oil-water separation tank
- 103: recovery container
- 104: pump

## Claims

1. A separation device comprising:
an orbiting mechanism (20) having an outer peripheral surface (21) whose partial region is immersed in a liquid to be treated (80) flowing through a first flow path (11) and which orbits to cross a liquid surface, and attracting oil (81) floating on the liquid surface to separate the oil (81) from the liquid to be treated (80) in the first flow path (11);
a first scraper (23) that removes the oil (81) attracted to the outer peripheral surface (21) of the orbiting mechanism (20) from the outer peripheral surface (21) of the orbiting mechanism (20);
an abrasive grain accumulation part (30) which is provided on a downstream side of the first flow path (11) with respect to a position where the outer peripheral surface (21) of the orbiting mechanism (20) is immersed, and in which non-magnetic abrasive grains (82) having larger specific gravity than the liquid to be treated (80) are accumulated; and
a liquid-to-be-treated discharge structure (35) which is provided on the downstream side of the first flow path (11) with respect to the position where the outer peripheral surface (21) of the orbiting mechanism (20) is immersed, and separates the liquid to be treated (80) in the first flow path (11) from the abrasive grains (82) and discharges the liquid to be treated (80) from the first flow path (11).

2. The separation device according to claim 1, wherein the liquid-to-be-treated discharge structure (35) includes
a container (36) which is immersed in the liquid to be treated (80) in the first flow path (11) and has an opening facing upward, and in which the liquid to be treated (80) on the liquid surface flows in through the opening, and
a discharge port (37) that discharges the liquid to be treated (80) that has flowed into the container (36) to an outside.

3. The separation device according to claim 1 or 2, further comprising:
a pre-stage separation device (50) that separates magnetic sludge (83) included in the liquid to be treated (80) flowing through a second flow path (51) from the liquid to be treated (80) by using a magnetic force; and
a connection flow path (40) that allows the liquid to be treated (80), which has flowed through the second flow path (51) and from which the magnetic sludge (83) has been separated, to flow into the first flow path (11) on an upstream side of the position where the outer peripheral surface (21) of the orbiting mechanism (20) is immersed.

4. The separation device according to claim 3, wherein the orbiting mechanism includes a first drum (20) having an outer peripheral surface (21) whose partial region is immersed in the liquid to be treated (80) flowing through the first flow path (11),
the pre-stage separation device (50) includes
a second drum (60) in which a part of an outer peripheral surface (61) thereof is immersed in the liquid to be treated (80) flowing through the second flow path (51), and which rotates with a straight line intersecting a flow direction in the second flow path (51) as a rotation axis when viewed in a plan view, in a state where a magnetic force is generated on the outer peripheral surface (61), and
a second scraper (73) that removes the magnetic sludge (83) attracted to the outer peripheral surface (61) of the second drum (60) from the outer peripheral surface (61) of the second drum (60),
a rotation axis (22) of the first drum (20) and a rotation axis (62) of the second drum (60) are parallel to each other, or the rotation axis (62) of the second drum (60) is located on an extension line of the rotation axis (22) of the first drum (20), and the first drum (20) and the second drum (60) rotate in the same rotation direction, and
the oil (81) removed by the first scraper (23) and the magnetic sludge (83) removed by the second scraper (73) are discharged to the same side when viewed from the rotation axes (22, 62) of the first drum (20) and the second drum (60) in a plan view.

5. The separation device according to claim 4, wherein the first flow path (11) and the second flow path (51) are defined in a single casing (95),
the first drum (20) and the second drum (60) are integrated, and
the first flow path (11) and the second flow path (51) are separated from each other by a partition wall (96) disposed in the casing (95).
